# EUROPEAN PATENT APPLICATION

(11) **EP 4 741 064 A1**
(43) Date of publication of application: **13.05.2026**
(21) Application number: 25732861.7
(22) Date of filing: 14.01.2025
(51) Int. Cl.: B05B 16/20, B05D 3/06, B41J 11/00, B05D 1/02, B41J 2/00, H01M 50/124

(54) **FINAL-CURING MECHANISM, JET PRINTING APPARATUS FOR INSULATING LAYER OF LITHIUM BATTERY, AND JET PRINTING METHOD**

(30) Priority: 11.06.2024 CN 202421319016 U; 11.06.2024 CN 202410747354
(71) Applicant: Eve Power Co., Ltd., Jingmen, Hubei 448000 (CN)
(72) Inventor: ZHANG, Xiaoran, Jingmen, Hubei 448000 (CN); LI, Weibo, Jingmen, Hubei 448000 (CN); SU, Bin, Jingmen, Hubei 448000 (CN); CHEN, Liquan, Jingmen, Hubei 448000 (CN)
(74) Representative: Nederlandsch Octrooibureau
(86) International application number: PCT/CN2025/072269
(87) International publication number: WO 2025/131133

(57) **Abstract**

Provided are a final curing mechanism, an apparatus for spray printing an insulation layer of a lithium battery, and a spray printing method. The final curing mechanism includes a housing (100), a final curing lamp assembly (21), and a cooling and heat-insulation unit. The final curing lamp assembly (21) is mounted in the housing (100) and spaced apart from a to-be-sprayed product. The cooling and heat-insulation unit has a heat-insulation layer. The heat-insulation layer is located between the final curing lamp assembly (21) and the to-be-sprayed product, and configured to block or delay transfer of heat generated by the final curing lamp assembly (21) to the to-be-sprayed product. The cooling and heat-insulation unit can reduce an impact of the heat generated by the final curing lamp assembly on the to-be-sprayed product, improving a yield rate of the to-be-sprayed product. By employing the final curing mechanism, the apparatus for spray printing the insulation layer of the lithium battery can reduce an impact of the heat generated by the final curing lamp assembly on the battery during final curing, improving a yield rate of the battery. The spray printing method enables applying a small amount of coating material on the to-be-sprayed product in a single spray and curing the coating material, and involves repeating the spraying and the curing several times, achieving a desired coating thickness while ensuring a curing effect of the coating material.

## Description

This application claims priorities to Chinese patent applications Nos. 202410747354.6 and 202421319016.4, filed with China National Intellectual Property Administration on June 11, 2024, the entire contents of which are incorporated herein by reference.

### FIELD

The present invention relates to the field of battery manufacturing technologies, for example, to a final curing mechanism, an apparatus for spray printing an insulation layer of a lithium battery, and a spray printing method applied in the apparatus for spray printing the insulation layer of the lithium battery.

### BACKGROUND

A lithium battery includes a case and a cell sealed inside the case. An insulation layer is wrapped around an outer surface of the case, which provides insulation and voltage-withstand protection for the case.

### SUMMARY

### Technical Problems

When an apparatus for spray printing an insulation layer of a lithium battery sprays a relatively thick coating, a coating material tends to flow and therefore fails to uniformly build up to a required thickness. When the coating material is relatively thick, ultraviolet light cannot reach a bottommost layer of the coating material, affecting a curing effect and making it difficult to obtain a high-quality coating. Further, when a curing lamp of the apparatus for spray printing an insulation layer of a lithium battery is a final curing lamp, the final curing lamp generates relatively substantial heat during operation. If the heat is transferred to the battery, components inside the battery are likely to be damaged. In severe cases, normal use of the battery is even affected, resulting in a low yield rate of the battery.

### Technical Solutions

The present invention provides a final curing mechanism. The final curing mechanism includes: a housing; a final curing lamp assembly mounted in the housing and spaced apart from a to-be-sprayed product, the final curing lamp assembly being configured to perform final curing on an insulation coating on the to-be-sprayed product; a cooling and heat-insulation unit having a heat-insulation layer. The heat-insulation layer is located between the final curing lamp assembly and the to-be-sprayed product and is configured to block or delay transfer of heat generated by the final curing lamp assembly to the to-be-sprayed product.

The present invention further provides an apparatus for spray printing an insulation layer of a lithium battery. The apparatus includes a spraying and curing mechanism and the final curing mechanism. The spraying and curing mechanism is located upstream of the final curing mechanism and configured to perform spraying and initial curing on the to-be-sprayed product. The apparatus further includes: a material carrier configured to carry the to-be-sprayed product; and a spraying station and a curing station that are sequentially arranged and spaced apart from each other in a predetermined direction. The to-be-sprayed product is subjected to the spraying and the curing at the spraying station and the curing station, respectively. The material carrier is configured to carry the to-be-sprayed product and move in the predetermined direction between the spraying station and the curing station, enabling the to-be-sprayed product to subject to two or more times of spraying and curing. The final curing mechanism is configured to perform final curing on the to-be-sprayed product that has been subjected to the two or more times of spraying and curing.

The present invention further provides a method for spray printing an insulation layer of a lithium battery. The method is applied in the apparatus for spray printing an insulation layer of a lithium battery. The method includes: a parameter presetting step: presetting a total thickness of a required coating as H₀, and presetting a thickness of a coating material sprayed in a single application as Hₓ, in which H₀=m*Hₓ, where m is a positive integer, and m≥2; and a spray printing step: performing m times of spraying and curing on the to-be-sprayed product. During each of the m times of spraying and curing, one spraying operation and one curing operation are sequentially performed on the to-be-sprayed product.

### Advantageous Effects

The present invention provides the following advantageous effects.

The final curing mechanism provided by the present invention includes the housing, the final curing lamp assembly, and the cooling and heat-insulation unit. The final curing lamp assembly is mounted in the housing and spaced apart from the to-be-sprayed product. The cooling and heat-insulation unit has the heat-insulation layer. The heat-insulation layer is located between the final curing lamp assembly and the to-be-sprayed product, and is configured to block or delay the transfer of the heat generated by the final curing lamp assembly to the to-be-sprayed product, to reduce an impact of the heat generated by the final curing lamp assembly on the to-be-sprayed product, improving a yield rate of the to-be-sprayed product. The to-be-sprayed product may be a battery or other electronic products.

The apparatus for spray printing an insulation layer of a lithium battery provided by the present invention includes the material carrier, the spraying station, and the curing station. The spraying station and the curing station are sequentially arranged and spaced apart from each other in a predetermined manner. The to-be-sprayed product is subjected to the spraying and the curing at the spraying station and the curing station, respectively. The material carrier is configured to carry the to-be-sprayed product and move in the predetermined direction between the spraying station and the curing station, enabling the to-be-sprayed product to subject to the two or more times of spraying and curing. Thus, applying a small amount of coating material on the to-be-sprayed product in a single spray and curing the coating material can be realized, and the spraying and the curing can be repeated several times, achieving a desired coating thickness while ensuring a curing effect of the coating material.

In addition, the spraying station and the curing station that are sequentially arranged and spaced apart from each other in the predetermined manner constitute a spraying-curing station. When one spraying-curing station is provided, the material carrier is configured to reciprocate between the spraying station and the curing station of the one spraying-curing station. When two or more spraying-curing stations are provided, the material carrier is configured to move unidirectionally to sequentially pass through the two or more spraying-curing stations. In both cases, applying a small amount of coating material in a single spray and curing the coating material can be realized, and the spraying and the curing can be repeated several times, achieving the desired coating thickness while ensuring the curing effect. Thus, adhesion of the coating to the to-be-sprayed product is improved, reducing a probability of the coating detaching from the to-be-sprayed product.

Additionally, by disposing a light blocking plate between a spray printing head and an initial curing lamp assembly, when the initial curing lamp assembly is turned on, light emitted from the initial curing lamp is blocked by the light blocking plate from irradiating on a nozzle of the spray printing head. In this way, any residual insulation coating on the nozzle is prevented from curing and clogging the nozzle under an influence of the light, ensuring normal operation of the spray printing head, and contributing to extending a service life of the apparatus for spray printing the insulation layer of the lithium battery.

Further, by providing a first housing, a second housing, and a transition enclosure connecting the first housing and the second housing, a spraying process and a curing process are enabled to be carried out in the housing, which can not only prevent dust and the like in an external environment from adhering to the coating and affecting a quality of the coating, but also stop the coating material or an odor of the coating material from escaping into the external environment, helping improve an operation environment.

Furthermore, by setting up a negative pressure air duct in a circumferential side of the spray printing head, coating material mist in a spraying range of the spraying station and dust outside the spraying range of the spraying station are sucked away, improving a spraying effect and the quality of the coating.

Furthermore, by disposing the cooling and heat-insulation unit in the second housing, the transfer of the heat generated by the final curing lamp assembly to the to-be-sprayed product is blocked or delayed by the cooling and heat-insulation unit, which avoids overheating of the to-be-sprayed product, ensuring product stability.

### BRIEF DESCRIPTION OF THE DRAWINGS

FIG. 1 is a flowchart illustrating a method for spray printing an insulation layer of a lithium battery according to some embodiments of the present invention.
FIG. 2 is a schematic diagram showing a to-be-sprayed product reciprocating a plurality of times to subject to spraying and curing according to some embodiments of the present invention.
FIG. 3 is a schematic diagram showing a to-be-sprayed product subjecting to a plurality of times of spraying and curing sequentially according to some embodiments of the present invention.
FIG. 4 is a schematic structural view of an example of an apparatus for spray printing an insulation layer of a lithium battery according to some embodiments of the present invention.
FIG. 5 is a schematic structural view of another example of an apparatus for spray printing an insulation layer of a lithium battery according to some embodiments of the present invention.
FIG. 6 is a schematic structural view of yet another example of an apparatus for spray printing an insulation layer of a lithium battery according to some embodiments of the present invention.
FIG. 7 is a schematic structural view of an example of a door plate assembly according to some embodiments of the present invention.
FIG. 8 is a schematic structural view of another example of a door plate assembly according to some embodiments of the present invention.
FIG. 9 is an enlarged partial view of a spraying and curing mechanism illustrated in FIG. 4.
FIG. 10 is a partial schematic structural view of a spraying and curing mechanism according to some embodiments of the present invention.
FIG. 11 is a schematic layout view of an example of an image capturer according to some embodiments of the present invention.
FIG. 12 is a schematic structural view of an example of a final curing mechanism according to some embodiments of the present invention.
FIG. 13 is a schematic structural view of still yet another example of an apparatus for spray printing an insulation layer of a lithium battery according to some embodiments of the present invention.
FIG. 14 is a schematic layout diagram of a laser beam and a battery during laser roughening according to some embodiments of the present invention.

In the figures:
10: loading station; 20: pretreatment station; 30: image capturing station; 40: spraying-curing station; 40a: spraying station; 40b: curing station; 50: final curing station; 60: unloading station;
100: housing; 100a: first housing; 100b: second housing; 100c: third housing;
200: transition enclosure; 200a: first transition enclosure; 200b: second transition enclosure;
300: door plate assembly; 301: door plate; 3011: first avoidance groove; 3012: second avoidance groove; 302: drive component; 3021: drive motor; 3022: second screw rod; 300a: first left door plate assembly; 300b: first right door plate assembly; 300c: second left door plate assembly; 300d: second right door plate assembly; 300e: third left door plate assembly; 300f: third right door plate assembly;
1: spraying and curing mechanism; 11: spray printing head; 111: spray printing head body; 112: nozzle; 12: negative pressure air duct; 121: negative pressure suction port; 13: first fixing member; 14: initial curing lamp assembly; 15: light blocking plate;
2: final curing mechanism; 21: final curing lamp assembly; 22: second fixing member; 23: linear light-transmitting heat-insulation plate;
3: image capturer;
41: guide rail; 42: first screw rod;
5: material carrier;
6: dust-removal and exhaust assembly;
7: to-be-sprayed product; 7a: battery; 71a: pole.

### DETAILED DESCRIPTION

In the description of the present invention, unless otherwise clearly specified and limited, terms "connect", "connect to", and "fix" should be understood in a broad sense. For example, it may be a fixed connection or a detachable connection or connection as one piece; mechanical connection or electrical connection; direct connection or indirect connection through an intermediate; internal communication of two components or the interaction relationship between two components. For those of ordinary skill in the art, the specific meaning of the above-mentioned terms in the present invention can be understood according to specific circumstances.

In the present invention, unless expressly stipulated and defined otherwise, the first feature "on" or "under" the second feature may mean that the first feature is in direct contact with the second feature, or the first and second features are in indirect contact through another feature between them. Moreover, the first feature "above" the second feature may mean that the first feature is directly above or obliquely above the second feature, or simply mean that the level of the first feature is higher than that of the second feature. The first feature "below" the second feature may mean that the first feature is directly below or obliquely below the second feature, or simply mean that the level of the first feature is smaller than that of the second feature.

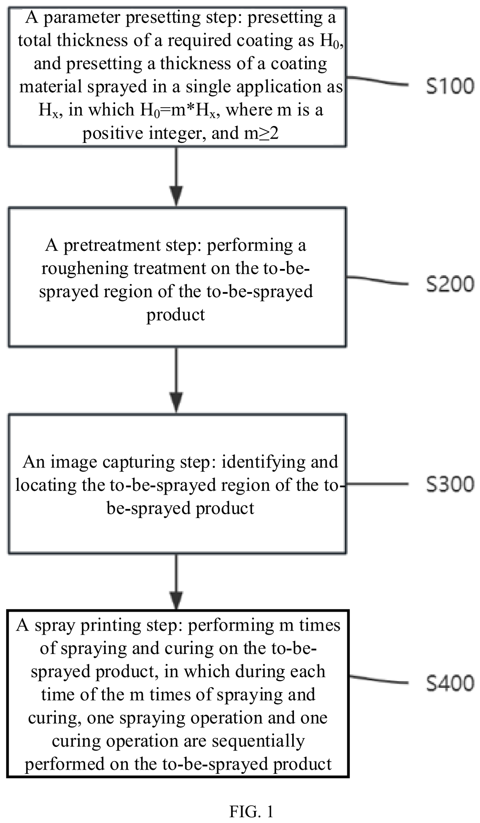

FIG. 1 is a flowchart illustrating a method for spray printing an insulation layer of a lithium battery according to some embodiments of the present invention. As illustrated in FIG. 1, the present invention provides the method for spray printing the insulation layer of the lithium battery. The method for spray printing the insulation layer of the lithium battery includes the following steps.

In S100, a parameter presetting step: a total thickness of a required coating is preset as H₀, and a thickness of a coating material sprayed in a single application is preset as Hₓ, in which H₀=m*Hₓ, where m is a positive integer, and m≥2.

In S200, a pretreatment step: a roughening treatment is performed on a to-be-sprayed region of a to-be-sprayed product. By performing the roughening treatment on the to-be-sprayed region, adhesion of the coating to the to-be-sprayed region can be improved. The roughening treatment may be a laser roughening process, a sandblasting roughening process, a grinding roughening process, and a molding roughening process during casting. The present invention is not limited to any of these examples. For the laser roughening process, a laser roughening treatment may be performed on the to-be-sprayed region of the to-be-sprayed product using a laser beam. Subsequent to the laser roughening treatment, plasma cleaning is performed on the to-be-sprayed region of the to-be-sprayed product to remove an organic residue on a product surface, ensuring cleanliness of the product surface and improving the adhesion of the coating.

In S300, an image capturing step: the to-be-sprayed region of the to-be-sprayed product is identified and located. The to-be-sprayed region of the to-be-sprayed product may be identified and located using an image capturer.

In S400, a spray printing step: m times of spraying and curing are performed on the to-be-sprayed product, in which during each of the m times of spraying and curing, one spraying operation and one curing operation are sequentially performed on the to-be-sprayed product. The method for spray printing the insulation layer of the lithium battery enables applying a small amount of coating material in a single spray and curing the coating material, and involves repeating the spraying and the curing several times, achieving a desired coating thickness while ensuring a curing effect. Thus, adhesion of the coating to the to-be-sprayed product is improved, reducing a probability of the coating detaching from the to-be-sprayed product.

It should be understood that, the method for spray printing the insulation layer of the lithium battery can be used for spray printing of an insulation layer, or a protective layer such as an anti-oxidation layer, as long as a spray printing principle for a coating involves spraying followed by curing. Additionally, the to-be-sprayed product may be a battery or other products, and the present invention is not limited to any of these examples.

In S400, n spraying-curing stations are set, where n is a positive integer and n≥1, in which each of the n spraying-curing stations includes a spraying station and a curing station that are sequentially arranged and spaced apart from each other in a predetermined direction. When n=1, the to-be-sprayed product reciprocates m times in the predetermined direction between the spraying station and the curing station of the spraying-curing station. The to-be-sprayed product is subjected to one spraying each time when the to-be-sprayed product passes through the spraying station. The coating material on the to-be-sprayed product is subjected to one curing each time when the coating material passes through the curing station. When n≥2, all spraying-curing stations are arranged sequentially in the predetermined direction. When n≥m, the to-be-sprayed product sequentially passes through m of the n spraying-curing stations in the predetermined direction. The to-be-sprayed product is subjected to one spraying and curing each time when the to-be-sprayed product passes through one spraying-curing station. When n<m, the to-be-sprayed product reciprocates in the predetermined direction between the spraying station and the curing station of the spraying-curing station, enabling the to-be-sprayed product to subject to m times of spraying and curing. Specific examples are explained below.

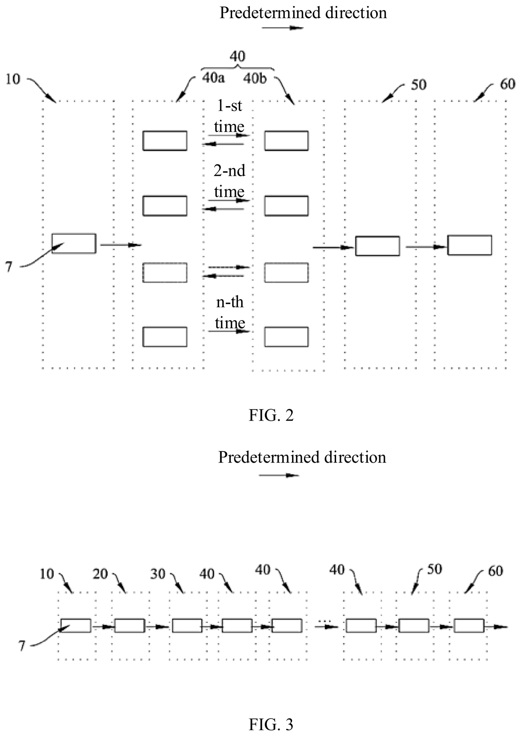

FIG. 2 illustrates a schematic diagram showing a to-be-sprayed product reciprocating a plurality of times to subject to spraying and curing according to some embodiments of the present invention. As illustrated in FIG. 2, the spray printing step includes: setting a spraying-curing station 40. The spraying-curing station 40 includes a spraying station 40a and a curing station 40b that are sequentially arranged and spaced apart from each other in the predetermined direction. The to-be-sprayed product 7 reciprocates n times in the predetermined direction between the spraying station 40a and the curing station 40b of the spraying-curing station 40. The to-be-sprayed product 7 is subjected to one spraying each time when the to-be-sprayed product 7 passes through the spraying station 40a. The coating material on to-be-sprayed product 7 is subjected to one curing each time when the coating material passes through the curing station 40b.

Further, as illustrated in FIG. 2, the spray printing step further includes: setting a loading station 10 and an unloading station 60. The loading station 10 is located upstream of the spraying-curing station 40 in the predetermined direction. The unloading station 60 is located downstream of the spraying-curing station 40 in the predetermined direction. The to-be-sprayed product 7 is loaded at the loading station 10, moves in the predetermined direction to the spraying-curing station 40, reciprocates n times between the spraying station 40a and the curing station 40b of the spraying-curing station 40, and is unloaded from the unloading station 60.

Further, as illustrated in FIG. 2, when curing of the to-be-sprayed product 7 at the curing station 40b is initial curing of the coating material, the method for spray printing an insulation layer of a lithium battery further includes, prior to unloading of the to-be-sprayed product 7: a final curing step: setting a final curing station 50. The final curing station 50 is located downstream of the spraying-curing station 40 in the predetermined direction. After the to-be-sprayed product 7 has been subjected to n times of spraying and curing, the coating material on the to-be-sprayed product 7 is subjected to final curing at the final curing station 50, and the to-be-sprayed product 7 is unloaded from the unloading station 60. In addition, during the final curing of the coating material on the to-be-sprayed product 7, cooling and heat insulation are applied to the to-be-sprayed product 7 to avoid overheating of the product, ensuring stability of product performance.

FIG. 3 illustrates a schematic diagram showing the to-be-sprayed product 7 subjecting to a plurality of times of spraying and curing sequentially according to some embodiments of the present invention. As illustrated in FIG. 3 and in conjunction with FIG. 2, the spray printing step includes: setting n spraying-curing stations 40, where n≥2. The n spraying-curing stations 40 are arranged sequentially in the predetermined direction. Each spraying-curing station 40 includes the spraying station 40a and the curing station 40b that are sequentially arranged and spaced apart from each other in the predetermined direction. The to-be-sprayed product 7 sequentially passes through the n spraying-curing stations 40 in the predetermined direction. The to-be-sprayed product 7 is subjected to one spraying and curing each time when the to-be-sprayed product 7 passes through one spraying-curing station 40.

Further, as illustrated in FIG. 3, the spray printing step further includes: setting the loading station 10 and the unloading station 60. The loading station 10 is located upstream of all spraying-curing stations 40 in the predetermined direction. The unloading station 60 is located downstream of all the spraying-curing stations 40 in the predetermined direction. The to-be-sprayed product 7 is loaded at the loading station 10, moves unidirectionally in the predetermined direction to sequentially pass through the n spraying-curing stations 40, and is unloaded from the unloading station 60.

Further, as illustrated in FIG. 3, when the curing of the to-be-sprayed product 7 at the curing station 40b is the initial curing of the coating material, the method for spray printing an insulation layer of a lithium battery further includes, prior to the unloading of the to-be-sprayed product 7: the final curing step: setting the final curing station 50. The final curing station 50 is located downstream of all the spraying-curing stations 40 in the predetermined direction. After the to-be-sprayed product 7 has been subjected to the n times of spraying and curing, the coating material on the to-be-sprayed product 7 is subjected to the final curing at the final curing station 50, and the to-be-sprayed product 7 is unloaded from the unloading station 60. In addition, during the final curing of the coating material on the to-be-sprayed product 7, the cooling and the heat insulation are applied to the to-be-sprayed product 7 to avoid the overheating of the product, ensuring the stability of the product performance.

It should be understood that, when two or more spraying-curing stations 40 are provided, the to-be-sprayed product 7 may move unidirectionally in the predetermined direction. In this case, a plurality of to-be-sprayed products 7 can sequentially subject to loading and a spray printing operation, which can increase product processing capacity.

To implement the method for spray printing the insulation layer of the lithium battery, the present invention further provides an apparatus for spray printing an insulation layer of a lithium battery. The apparatus for spray printing the insulation layer of the lithium battery can enable applying a small amount of coating material in a single spray and curing the coating material, and involves repeating the spraying and the curing several times, achieving the desired coating thickness while ensuring the curing effect. Thus, the adhesion of the coating to the to-be-sprayed product 7 is improved, reducing the probability of the coating detaching from the to-be-sprayed product 7.

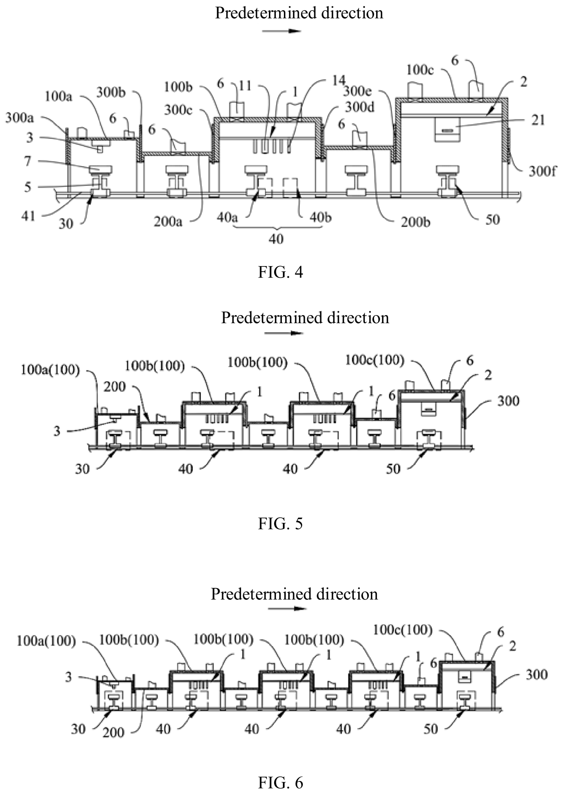

FIG. 4 illustrates a schematic structural view of an example of an apparatus for spray printing an insulation layer of a lithium battery according to some embodiments of the present invention. FIG. 5 illustrates a schematic structural view of another example of an apparatus for spray printing an insulation layer of a lithium battery according to some embodiments of the present invention. FIG. 6 illustrates a schematic structural view of yet another example of an apparatus for spray printing an insulation layer of a lithium battery according to some embodiments of the present invention. As illustrated in FIG. 4 to FIG. 6, the apparatus for spray printing the insulation layer of the lithium battery according to the present invention includes the spraying-curing station 40, a spraying and curing mechanism 1, and a material carrier 5. The quantity of spraying-curing stations 40 equals the quantity of spraying and curing mechanisms 1. The spraying-curing stations 40 are arranged in a one-to-one correspondence with the spraying and curing mechanisms 1. One or n spraying-curing stations 40 and one or n spraying and curing mechanisms 1 are provided, where n is a positive integer and n≥2. The one or n spraying-curing stations 40 are arranged sequentially in the predetermined direction. Each spraying-curing station 40 includes the spraying station 40a and the curing station 40b that are sequentially arranged and spaced apart from each other in the predetermined direction. The spraying and curing mechanism 1 includes a spray printing head 11 and a curing lamp assembly. The spray printing head 11 is configured to spray a coating material. The curing lamp assembly is configured to perform curing on the coating material on the to-be-sprayed product 7. The material carrier 5 is configured to carry the to-be-sprayed product 7 and reciprocate or move unidirectionally in the predetermined direction. When the one spraying-curing station 40 is provided, the material carrier 5 is configured to carry the to-be-sprayed product 7 and reciprocate a plurality of times in the predetermined direction between the spraying station 40a and the curing station 40b, in such a manner that the one spraying and curing mechanism 1 performs two or more times of spraying and curing on the to-be-sprayed product 7. When the n spraying-curing stations 40 are provided, the material carrier 5 is configured to carry the to-be-sprayed product 7, and move unidirectionally in the predetermined direction to sequentially pass through the n spraying-curing stations 40, in such a manner that the n spraying and curing mechanisms 1 perform two or more times of spraying and curing on the to-be-sprayed product 7.

It should be understood that, the apparatus for spray printing the insulation layer of the lithium battery is not limited to including one, two, or three spraying-curing stations 40 and one, two, or three spraying and curing mechanisms 1, as illustrated in FIG. 4 to FIG. 6. Four, five, six, seven, or any quantity of spraying-curing stations 40 and four, five, six, seven, or any quantity of spraying and curing mechanisms 1 may also be provided. The specific quantity can be designed based on required production capacity and an available factory space, which will not be exhaustively listed here.

The curing lamp assembly may include an initial curing lamp assembly, in which case the apparatus for spray printing the insulation layer of the lithium battery includes a final curing mechanism located downstream of the spraying and curing mechanism 1. The curing lamp assembly may further include both the initial curing lamp assembly and a final curing lamp assembly, in which case the final curing mechanism is unnecessary. The curing lamp assembly may further include the final curing lamp assembly, in which case, likewise, the final curing mechanism is unnecessary. A main difference among the three cases lies in how the coating on the to-be-sprayed product 7 is formed: the coating on the to-be-sprayed product 7 may be formed through a plurality of times of spraying and initial curing, followed by final curing, or through a plurality of times of spraying, initial curing, and final curing, or through a plurality of times of spraying and final curing.

For the first case, as illustrated in FIG. 4 to FIG. 6, the curing lamp assembly includes an initial curing lamp assembly 14. In this case, the apparatus for spray printing the insulation layer of the lithium battery should also include the final curing station 50 and a final curing mechanism 2 corresponding to the final curing station 50. The final curing mechanism 2 includes a final curing lamp assembly 21 configured to perform final curing on an insulation coating formed through initial curing. Curing light emitted by the final curing lamp assembly 21 has greater intensity than that emitted by the initial curing lamp assembly 14. After being sprayed, the to-be-sprayed product 7 is subjected to the initial curing by the initial curing lamp assembly 14, which prevents the coating material from flowing freely but does not yet form a stable coating. After a plurality of times of spraying and initial curing, the to-be-sprayed product 7 is subjected to the final curing by the final curing lamp assembly 21, causing the coating material to form a stable coating. It should be understood that, when two or more spraying-curing stations 40 are provided, the to-be-sprayed product 7 is subjected to a 1-st time of spraying followed by initial curing, a 2-nd time of spraying followed by initial curing, a 3-rd time of spraying followed by initial curing, and so on. The above spraying-and-initial-curing step is repeated, until a thickness of the coating material meets requirements. Then, the final curing is performed. In this way, the coating material can be ensured to form the coating with strong adhesion, a high quality, and a stable structure.

For the second case, the curing lamp assembly includes both the initial curing lamp assembly 14 and the final curing lamp assembly 21. The initial curing lamp assembly 14 and the final curing lamp assembly 21 are spaced apart from each other in the predetermined direction. In this case, the apparatus for spray printing the insulation layer of the lithium battery no longer includes the final curing mechanism 2. Under this circumstance, during spray printing, after subjecting to a 1-st time of spraying, the to-be-sprayed product 7 is subjected to initial curing and final curing sequentially, forming a first insulation layer. The spraying-initial-curing-final-curing step is repeated, until a thickness of the coating meets requirements. The method for spray printing the insulation layer of the lithium battery can improve adhesion and a quality of the coating. It should be understood that, specifically for the second case, the to-be-sprayed product 7 may also subject to a plurality of times of spraying and initial curing, and then a single time of final curing to form a desired coating. In this instance, a main difference between the second case and the first case lies in whether the final curing lamp assembly 21 is disposed outside and independent from the spraying and curing mechanism 1, or is disposed inside the spraying and curing mechanism 1.

For the third case, the curing lamp assembly includes the final curing lamp assembly 21. In this case, the apparatus for spray printing the insulation layer of the lithium battery no longer includes the final curing mechanism 2. Under this circumstance, during the spray printing, after subjecting to a 1-st time of spraying, the to-be-sprayed product 7 directly subjects to final curing to form a first insulation layer. The spraying-final-curing step is repeated, until the thickness of the coating meets the requirements. The method for spray printing the insulation layer of the lithium battery can improve the adhesion and the quality of the coating. It should be understood that, since the third case involves directly performing the final curing after the spraying, whereas the second case involves performing the initial curing and the final curing sequentially after the spraying, an amount of coating material sprayed in each time in the third case must be less than that in the second case to ensure the adhesion and a formation quality of the coating.

It should be understood that, when the coating serves as the insulation layer, the coating material may be an insulation coating. The insulation coating can transform from a liquid state to a solid state under irradiation with curing light. Typically, the curing light is ultraviolet light. Both the initial curing lamp assembly 14 and the final curing lamp assembly 21 are capable of emitting ultraviolet light.

In an embodiment, as illustrated in FIG. 3, the apparatus for spray printing the insulation layer of the lithium battery further includes the loading station 10 and the unloading station 60. The loading station 10 is located upstream of all the spraying-curing stations 40 in the predetermined direction, while the unloading station 60 is located downstream of all the spraying-curing stations 40 in the predetermined direction, to facilitate loading and unloading of the to-be-sprayed product 7. The loading may be performed by an operator or a loading device at the loading station 10. The unloading may be performed by the operator or an unloading device at the unloading station 60.

In an embodiment, the apparatus for spray printing the insulation layer of the lithium battery further includes an image capturing station 30 and an image capturer 3 corresponding to the image capturing station 30. The image capturing station 30 is located downstream of the loading station 10. The image capturer 3 is configured to identify and locate the to-be-sprayed region of the to-be-sprayed product 7 located at the image capturing station 30. As an example, the image capturer 3 may be a Charge Coupled Device (CCD) camera.

In an embodiment, the apparatus for spray printing the insulation layer of the lithium battery further includes a pretreatment station 20 and a pretreatment device corresponding to the pretreatment station 20. The pretreatment station 20 is located upstream of the image capturing station 30. The pretreatment device is configured to perform a roughening treatment on the to-be-sprayed region of the to-be-sprayed product 7. As an example, the pretreatment device may be a laser generator.

In other embodiments, the apparatus for spray printing the insulation layer of the lithium battery may omit the pretreatment station 20 and the pretreatment device. The to-be-sprayed product 7 may subject to a pretreatment in other devices. The pretreated to-be-sprayed product 7 may then be loaded at the loading station 10.

In an embodiment, the apparatus for spray printing the insulation layer of the lithium battery further includes a driving mechanism. The driving mechanism includes a driver (not illustrated in the figure) and a guide rail 41. The guide rail 41 extends in the predetermined direction. The driver is configured to drive the material carrier 5 to reciprocate or move unidirectionally along the guide rail 41, enabling the to-be-sprayed product 7 to reciprocate or move unidirectionally in the predetermined direction.

In an embodiment, as illustrated in FIG. 4 and FIG. 5, the loading station 10 (as illustrated in FIG. 3), the pretreatment station 20, the image capturing station 30, two spraying-curing stations 40, the final curing station 50, and the unloading station 60 (as illustrated in FIG. 3) are sequentially arranged at the guide rail 41 in the predetermined direction. The driver is configured to drive the material carrier 5 to move along the guide rail 41. When the material carrier 5 moves to the loading station 10, the operator or the loading device places the to-be-sprayed product 7 at the material carrier 5. The material carrier 5 is driven by the driver to move along the guide rail 41 to the pretreatment station 20, where the roughening treatment is performed by the pretreatment device on the to-be-sprayed region of the to-be-sprayed product 7. The material carrier 5 is driven by the driver to move along the guide rail 41 to the image capturing station 30. The to-be-sprayed region of the to-be-sprayed product 7 at the image capturing station 30 is identified and located by the image capturer 30. The material carrier 5 is driven by the driver to move along the guide rail 41 to a first spraying-curing station 40, where spraying and initial curing are performed by a first spraying and curing mechanism 1 on the to-be-sprayed region of the to-be-sprayed product 7. The material carrier 5 is driven by the driver to move along the guide rail 41 to a second spraying-curing station 40, where spraying and initial curing are performed by a second spraying and curing mechanism 1 on the to-be-sprayed region of the to-be-sprayed product 7. The material carrier 5 is driven by the driver to move along the guide rail 41 to the final curing station 50, where final curing is performed by the final curing mechanism 2 on the coating material on the to-be-sprayed product 7. The material carrier 5 is driven by the driver to move along the guide rail 41 to the unloading station 60, where the operator or the unloading device removes the to-be-sprayed product 7, which has been subjected to coating spray printing, from the material carrier 5.

In another embodiment, as illustrated in FIG. 4 and FIG. 6, the loading station 10 (as illustrated in FIG. 3), the pretreatment station 20 (as illustrated in FIG. 5), the image capturing station 30, three spraying-curing stations 40, the final curing station 50, and the unloading station 60 (as illustrated in FIG. 3) are sequentially arranged at the guide rail 41 in the predetermined direction. It should be understood that an arrangement of stations at the guide rail 41 is not limited to the above examples. For example, one, four, five, six, seven, or any quantity of spraying-curing stations 40 may also be provided. In addition, when the quantity of spraying-curing stations 40 is equal to the quantity of times of spraying to achieve a required thickness of the coating, a plurality of material carriers 5 are provided. The plurality of material carriers 5 can be driven by the driver to move. Each material carrier 5 is configured to carry the to-be-sprayed product 7. In this way, the material carrier 5 is disposed at each station, allowing a plurality of to-be-sprayed products 7 to simultaneously subject to spray printing processes to increase the production capacity.

Further, as illustrated in FIG. 4 to FIG. 6, the apparatus for spray printing the insulation layer of the lithium battery further includes a housing 100 and a transition enclosure 200. The housing 100 is configured to cover a station (such as the image capturing station 30, the spraying-curing station 40, and the final curing station 50), and has an entrance for entry of the material carrier 5 and an exit for exit of the material carrier 5. Two adjacent housings 100 are connected by the transition enclosure 200. The transition enclosure 200 has a transition inlet for entry of the material carrier 5 and a transition outlet for exit of the material carrier 5. Through cooperation between the housing 100 and the transition enclosure 200, the material carrier 5 can be ensured to remain in an enclosed or semi-enclosed space, which not only facilitates dust control in an operation region to ensure a coating quality, but also avoids overflow of the coating material, improving an operation environment for the operator. In an operation space of the spraying-curing station 40, dust must be strictly controlled to ensure that cleanliness reaches at least International Organization for Standardization class 7, ISO class 7 (referring to ISO14644-1 international standard-classification of air cleanliness), to prevent the coating quality from being affected by dust particles.

Additionally, the apparatus for spray printing the insulation layer of the lithium battery includes a door plate assembly 300. The housing 100 is provided with the door plate assembly 300 at the entrance of the housing 100. The door plate assembly 300 is configured to open or close the entrance of the housing 100. The housing 100 is provided with the door plate assembly 300 at the exit of the housing 100. The door plate assembly 300 is configured to open or close the exit of the housing 100. Thus, full enclosure measures can be implemented on specific housings 100 as desired.

In an embodiment, the apparatus for spray printing the insulation layer of the lithium battery further includes a dust-removal and exhaust assembly 6. Each of the housing 100 and the transition enclosure 200 has an exhaust port. The dust-removal and exhaust assembly 6 is disposed at each exhaust port to perform dust removal operations inside the housing 100 and the transition enclosure 200, improving an operation environment of an operation space formed by the housing 100 and the transition enclosure 200, and enhancing a quality of spraying. The dust-removal and exhaust assembly 6 may be an exhaust fan. Dust and scattered coating material is expelled by the exhaust fan from an inside of the housing 100 and the transition enclosure 200 to an outside of the housing 100 and the transition enclosure 200, and is subjected to a purification treatment before being discharged outside the factory.

As an example, for the apparatus for spray printing the insulation layer of the lithium battery illustrated in FIG. 4, an arrangement of the housing 100, the transition enclosure 200, and the door plate assembly 300 is explained. Since the apparatus for spray printing the insulation layer of the lithium battery includes the image capturing station 30, the spraying-curing station 40, and the final curing station 50 that are sequentially arranged at intervals in the predetermined direction, three housings 100, two transition enclosures 200, and six door plate assemblies 300 are provided. For ease of description, the housing covering the image capturing station 30 is referred to as a first housing 100a, the door plate assembly 300 at the entrance of the first housing 100a is referred to as a first left door plate assembly 300a, and the door plate assembly 300 at the exit of the first housing 100a is referred to as a first right door plate assembly 300b. The housing 100 covering the spraying-curing station 40 is referred to as a second housing 100b, the door plate assembly 300 at the entrance of the second housing 100b is referred to as a second left door plate assembly 300c, and the door plate assembly 300 at the exit of the second housing 100b is referred to as a second right door plate assembly 300d. The housing 100 covering the final curing station 50 is referred to as a third housing 100c. The door plate assembly 300 at the entrance of the third housing 100c is referred to as a third left door plate assembly 300e. The door plate assembly 300 at the exit of the third housing 100c is referred to as a third right door plate assembly 300f. The transition enclosure 200 connecting the first housing 100a and the second housing 100b is referred to as a first transition enclosure 200a. The transition enclosure 200 connecting the second housing 100b and the third housing 100c is referred to as a second transition enclosure 200b.

Further, as illustrated in FIG. 4, the first housing 100a covers the image capturing station 30, the second housing 100b covers the spraying-curing station 40, and the third housing 100c covers the final curing station 50. A transition inlet of the first transition enclosure 200a is connected to the exit of the first housing 100a. A transition outlet of the first transition enclosure 200a is connected to the entrance of the second housing 100b. A transition inlet of the second transition enclosure 200b is connected to the exit of the second housing 100b. A transition outlet of the second transition enclosure 200b is connected to the entrance of the third housing 100c. The first left door plate assembly 300a is mounted at the first housing 100a, and configured to open or close the entrance of the first housing 100a. The first right door plate assembly 300b is mounted at the first housing 100a, located between the exit of the first housing 100a and the transition inlet of the first transition enclosure 200a, and configured to open or close the exit of the first housing 100a, i.e., to open or close a region that enables communication between the first housing 100a and the first transition enclosure 200a. The second left door plate assembly 300c is mounted at the second housing 100b, located between the transition outlet of the first transition enclosure 200a and the entrance of the second housing 100b, and configured to open or close the entrance of the second housing 100b, i.e., to open or close a region that enables communication between the first transition enclosure 200a and the second housing 100b. The second right door plate assembly 300d is mounted at the second housing 100b, located between the exit of the second housing 100b and the transition inlet of the second transition enclosure 200a, and configured to open or close the exit of the second housing 100b, i.e., to open or close a region that enables communication between the second housing 100b and the second transition enclosure 200a. The third left door plate assembly 300e is mounted at the third housing 100c, located between the transition outlet of the second transition enclosure 200b and the entrance of the third housing 100c, and configured to open or close the entrance of the third housing 100c, i.e., to open or close a region that enables communication between the second transition enclosure 200b and the third housing 100c. The third right door plate assembly 300f is mounted at the third housing 100c, and configured to open or close the exit of the third housing 100c.

With the apparatus for spray printing the insulation layer of the lithium battery, the first housing 100a, the first transition enclosure 200a, the second housing 100b, the second transition enclosure 200b, and the third housing 100c are provided, which can ensure that the material carrier 5 carrying the to-be-sprayed product 7 is always in a closed or semi-closed space. Further, by disposing the door plate assembly 300 at each of the entrance and the exit of the housing 100 to open or close the entrance and/or the exit of the housing 100, an entire spray printing process operation can be performed in a closed or semi-closed space, which can not only reduce an impact of external environmental factors (such as dust, an airflow from a fan, etc.) on a quality of spraying, but also stops an odor of the coating material from escaping into the external environment, helping improve the operation environment.

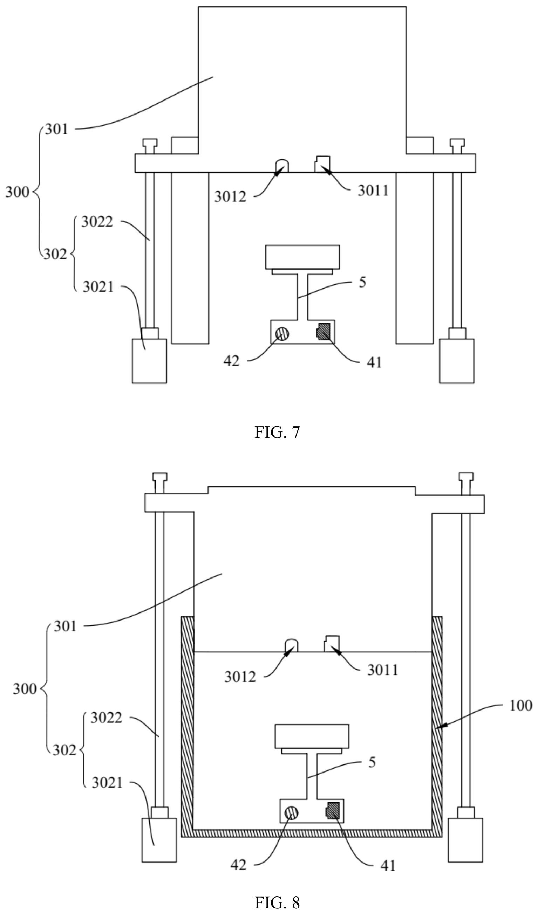

FIG. 7 illustrates a schematic structural view of an example of the door plate assembly 300 according to some embodiments of the present invention. As illustrated in FIG. 7 and in conjunction with FIG. 4, the door plate assembly 300 includes a door plate 301 and a drive component 302. The drive component 302 is configured to drive the door plate 301 to move up and down, in such a manner that the door plate 301 has an open position in which the entrance or the exit of the housing 100 is opened and a closed position in which the entrance or the exit of the housing 100 is closed. It should be understood that, when the door plate 100 is in the closed position, the door plate 301 in the first left door plate assembly 300a can block the entrance of the first housing 100a, and the door plate 301 in the first right door plate assembly 300b can block both the exit of the first housing 100a and the transition inlet of the first transition enclosure 200a; similarly, the door plate 301 in the second left door plate assembly 300c can block both the entrance of the second housing 100b and the exit of the first transition enclosure 200a, and the door plate 301 in the second right door plate assembly 300d can block both the exit of the second housing 100b and the entrance of the second transition enclosure 200b; similarly, the door plate 301 in the third left door plate assembly 300e can block both the entrance of the third housing 100c and the exit of the second transition enclosure 200b, and the door plate 301 in the third right door plate assembly 300f can block the exit of the third housing 100c.

Moreover, since the guide rail 41 sequentially passes through the first housing 100a, the first transition enclosure 200a, the second housing 100b, the second transition enclosure 200b, and the third housing 100c in the predetermined direction, the door plate 301 should be able to avoid the guide rail 41 when the door plate 301 is in the closed position to avoid a collision between the door plate 301 and the guide rail 41. Based on this, the door plate 301 has a first avoidance groove 3011 at a lower end of the door plate 301. The first avoidance groove 3011 is configured to avoid the guide rail 41. When the door plate 301 is in the closed position, the guide rail 41 can be accommodated in the first avoidance groove 3011, which can not only avoid the collision between the door plate 301 and the guide rail 41, but also ensure that the door plate 301 can better close the entrance or the exit of the housing 100.

Further, as illustrated in FIG. 7, the driving mechanism further includes a first screw rod 42. The first screw rod 42 is arranged parallel to and spaced apart from the guide rail 41. The material carrier 5 is in a transmission engagement with the first screw rod 42. The driver is configured to drive the first screw rod 42 to rotate to move the material carrier 5 along the first screw rod 42. In this case, the door plate 301 further has a second avoidance groove 3012 at the lower end of the door plate 301. The second avoidance groove 3012 is configured to avoid the first screw rod 42. When the door plate 301 is in the closed position, the first screw rod 42 can be accommodated in the second avoidance groove 3012, which can not only avoid the collision between the door plate 301 and the first screw rod 42, but also ensure that the door plate 301 can better close the entrance or the exit of the housing 100. In other embodiments, the driver may further be configured to drive the material carrier 5 to move along the guide rail 41 through other transmission mechanisms, such as a gear and rack transmission mechanism. The rack is arranged parallel to and spaced apart from the guide rail 41. The material carrier 5 is provided with the gear. The gear is driven by the driver to rotate, in such a manner that the material carrier 5 can move relative to the rack. In this case, the second avoidance groove 3012 at the lower end of the door plate 301 can be set to avoid the rack. It should be understood that, for different transmission mechanisms, avoidance grooves of different shapes can be formed at the lower end of the door plate 301, as long as a collision between the door plate 31 and the transmission mechanism can be avoided and the door plate 301 can be ensured to close the entrance or the exit of the housing 100, which is not elaborated herein.

Further, as illustrated in FIG. 7, two drive components 302 are provided. The two drive components 302 are disposed at two sides of the door plate 301, respectively. The lower end of the door plate 301 includes a connection portion at each of two sides of the lower end of the door plate 301. The connection portion is connected to an output end of the drive component 302. The two drive components 302 are configured to simultaneously drive the door plate 301 to move up and down, which can not only enable adjusting the door plate 301 to the open position or the closed position as required, but also ensure stable upward and downward movements of the door plate 301, enhancing apparatus safety. In an embodiment, the drive component 302 includes a drive motor 3021 and a second screw rod 3022. The door plate 301 is in a transmission engagement with the second screw rod 3022. The drive motor 3021 is configured to drive the second screw rod 3022 to rotate, to move the door plate 301 up and down. In other embodiments, the drive component 302 may further include a drive motor, a sprocket, and a chain. The door plate 301 is fixed to the chain. Through an engagement between the sprocket and the chain, the sprocket is driven by the drive motor to rotate, enabling the chain to drive the door plate 301 to move up and down. It should be understood that the drive component 302 is not limited to the above two examples. Any drive device capable of driving the door plate 301 to move up and down is acceptable. The present invention is not limited in this regard.

FIG. 8 illustrates a schematic structural view of another example of the door plate assembly 300 according to some embodiments of the present invention. As illustrated in FIG. 8 and in conjunction with FIG. 4, the door plate assembly 300 includes the door plate 301 and the drive component 302. The drive component 302 is configured to drive the door plate 301 to move up and down, in such a manner that the door plate 301 has the open position in which the entrance or the exit of the housing 100 is opened and the closed position in which the entrance or the exit of the housing 100 is closed. Main differences between the door plate assembly 300 in this example and the door plate assembly 300 in the previous example lie in: a connection position between the door plate 301 and the drive component 302 and an engagement manner between the door plate 301 and the housing 100. Specifics are as follows.

The door plate 301 includes a connection portion at an upper end of the door plate 301. The connection portion is connected to the output end of the drive component 302. The two drive components 302 are located at two sides of the door plate 301, respectively. The two drive components 302 are configured to simultaneously drive the door plate 301 to move up and down, in such a manner that the door plate 301 opens or closes the entrance or the exit of the housing 100.

Further, an outer wall of the door plate 301 is slidingly engaged with the entrance or the exit of the housing 100. The entrance or the exit of the housing 100 forms a guide groove. The door plate 301 is slidingly engaged with the guide groove, which can ensure that the door plate 301 stably moves up and down in a height direction, guaranteeing stability of the door plate 301.

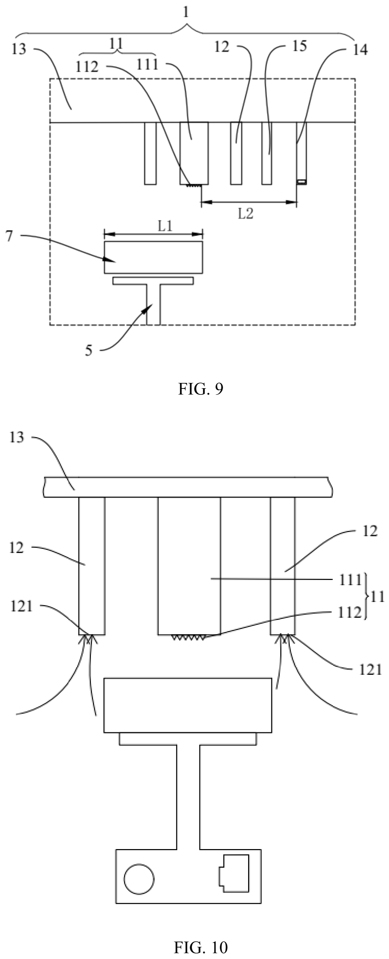

FIG. 9 illustrates an enlarged partial view of the spraying and curing mechanism 1 illustrated in FIG. 4. FIG. 10 illustrates a partial schematic structural view of the spraying and curing mechanism 1 according to some embodiments of the present invention. As illustrated in FIG. 9 to FIG. 10, the spraying and curing mechanism 1 further includes a light blocking plate 15. The light blocking plate 15 is located between the spray printing head 11 and the initial curing lamp assembly 14. The spray printing head 11 includes a spray printing head body 111 and a nozzle 112 mounted at a lower end of the spray printing head body 111. The light blocking plate 15 is configured to block curing light from irradiating on the nozzle 112 of the spray printing head 11. As long as a projection of the light blocking plate 15 in a direction of the nozzle 112 of the spray printing head 11 fully covers the nozzle 112, the curing light can be blocked from irradiating on the nozzle 112. By disposing the light blocking plate 15 between the spray printing head 11 and the initial curing lamp assembly 14, when the initial curing lamp assembly 14 is turned on, the curing light is blocked by the light blocking plate 15 from irradiating on the nozzle 112 of the spray printing head 11. In this way, any residual coating on the nozzle 112 is prevented from curing and clogging the nozzle 112 under an influence of the curing light, ensuring normal operation of the spray printing head 11 to guarantee a quality of subsequent coating formation, and contributing to extending a service life of the apparatus for spray printing the insulation layer of the lithium battery.

The spraying and curing mechanism 1 further includes a first fixing member 13. The spray printing head 11, the initial curing lamp assembly 14, and the light blocking plate 15 are all suspended above the guide rail 41 via the first fixing member 13. The initial curing lamp assembly 14 is configured to emit the curing light downwards to initially cure the coating material on the to-be-sprayed product 7. In this case, as long as a position of the lowest nozzle 112 in the spray printing head 11 and a light-emitting part of the initial curing lamp assembly 14 are both lower than a bottom of the light blocking plate 15, the curing light can be blocked by the light blocking plate 15 from irradiating on the nozzle 112, which avoids clogging and an operational failure at a liquid discharge end of the nozzle 112 due to exposure to the curing light, or any effect on the quality of the coating formation.

A length of the to-be-sprayed region in the predetermined direction is L1. A distance from a downstream side of the nozzle 112, in the spray printing head 11, that is closest to the light blocking plate 15 to an upstream side of the initial curing lamp assembly 14 that is closest to the light blocking plate 15 is L2, where L2=L1. In this embodiment, the to-be-sprayed product 7 is a battery. The to-be-sprayed region of the battery is a battery case. A length of the battery case in the predetermined direction is L1. A length of the to-be-sprayed region equals the length of the battery case. A distance from the nozzle 112 closest to the light blocking plate 15 to a side of the initial curing lamp assembly 14 that is adjacent to the light blocking plate 15 is L2, where L2=L1. When the battery case passes directly below the nozzle 112, the spray printing head immediately sprays the coating material. Spraying onto the battery case is completed precisely when the battery case has just moved to a position directly below the side of the initial curing lamp assembly 14 that is adjacent to the light blocking plate 15. If L2<L1, the battery case would be in a state of subjecting to spraying and initial curing simultaneously. In such a case, the curing light from the initial curing lamp assembly 14 is likely to cause the coating material sprayed from the nozzle 112 to prematurely coagulate and solidify into particles, affecting the quality of the coating formation. If L2>L1, after the spraying onto the battery case is completed, the battery case has not yet moved to a position directly below the initial curing lamp assembly 14, affecting a processing efficiency.

The light blocking plate 15 may be an aluminum alloy plate or a stainless steel plate. The light blocking plate 15 made of an aluminum alloy or stainless steel not only possesses satisfactory structural strength but also is less prone to aging under exposure to ultraviolet light. In a practical implementation, a light blocking layer may also be coated on an outer surface of the aluminum alloy plate or the stainless steel plate to prevent the light blocking plate 15 from reflecting light. In a practical implementation, the light blocking plate 15 may also be a plastic plate, a wood plate, etc. No specific limitation is imposed on the light blocking plate 15 herein. Any plate capable of blocking light is acceptable.

In an embodiment, a plurality of nozzles 112 are provided. The plurality of nozzles 112 are mounted at the spray printing head body 111. With the plurality of nozzles 112, a spraying range per spray operation can be increased, improving a spraying efficiency. The plurality of nozzles 112 may be arranged linearly at intervals in the predetermined direction at the spray printing head body 111, or arranged in a matrix pattern in the predetermined direction at the spray printing head body 111, as long as the spraying efficiency and spraying uniformity can be improved. The present invention is not limited in this regard. Further, the spray printing head body 111 includes a main control unit and a component such as a valve configured to control the spraying of coating material from the nozzle 112.

The spraying and curing mechanism 1 further includes a waste discharge pipe (not illustrated in the figure) and a plurality of negative pressure air ducts 12 connected to the waste discharge pipe. The waste discharge pipe is disposed outside the housing 100. A plurality of negative pressure air ducts 12 are disposed inside the housing 100 and arranged at intervals around the spray printing head 11. Each negative pressure air duct 12 is fixed to the first fixing member 13 and has an end protruding from a lower side surface of the first fixing member 13. A part of the negative pressure air duct 12 protruding from the lower side surface of the first fixing member 13 has a negative pressure suction port 121. Under a negative pressure, the negative pressure suction port 121 draws, coating material mist in the spraying range of the spraying station 40a and dust outside the spraying range of the spraying station 40a, into the negative pressure air duct 12 (arrows in FIG. 10 indicate a flow direction of the mist and dust). The coating material mist and the dust are then discharged through the waste discharge pipe to a waste treatment device, preventing the mist from affecting an appearance of the coating.

The apparatus for spray printing the insulation layer of the lithium battery further includes a main control mechanism (not illustrated in the figure) in a communication connection with each of the driving mechanism, the image capturer 3, the spray printing head 11, the initial curing lamp assembly 14, and the final curing lamp assembly 21. By setting data information regarding stations such as the loading station 10, the spraying-curing station 40, the final curing station 50, and the unloading station 40 in a system of the main control mechanism, the main control mechanism can control the driving mechanism to achieve an automated movement of the material carrier 5. The image capturer 3 is capable of identifying and locating the to-be-sprayed region of the to-be-sprayed product 7 and transmitting information to the main control mechanism. Based on the obtained information, the main control mechanism can control the spray printing head 11 to spray the coating material onto the to-be-sprayed region. When the material carrier 5 moves to the spraying station 40a of the spraying-curing station 40, the main control mechanism controls the nozzle 112 to spray the coating material via the main control unit of the spray printing head body 111. When the material carrier 5 moves to the curing station 40b of the spraying-curing station 40, the main control mechanism controls the initial curing lamp assembly 14 to be activated to perform initial curing on the coating material. When the material carrier 5 moves to the final curing station 50, the main control mechanism controls the final curing lamp assembly 21 to be activated to perform final curing on the initially cured coating material.

The main control mechanism includes a first control unit and a second control unit in a communication connection with the first control unit. The first control unit is in a communication connection with the image capturer 3, and is capable of generating a spray printing model based on received spray printing information and transmitting the spray printing model to the second control unit. The second control unit is in a communication connection with the spray printing head 11, and is capable of automatically creating a spray printing task based on the spray printing model. The second control unit is in a communication connection with the spray printing head body 111. The spray printing head body 111 contains a control board that controls spraying of the plurality of nozzles 112. The second control unit is capable of automatically assigning the spray printing task to the control board based on the spray printing model. The control board is configured to control, based on the received spray printing task, the plurality of nozzles 112 to spray the coating material.

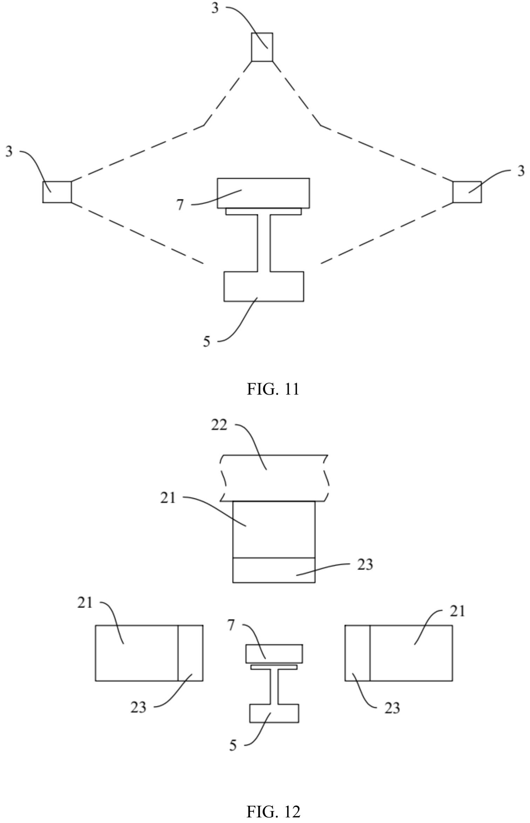

FIG. 11 illustrates a schematic layout view of an example of the image capturer 3 according to some embodiments of the present invention. As illustrated in FIG. 11, three image capturers 3 are provided. One of the three image capturers 3 is located above the to-be-sprayed product 7, while another two of the three image capturers 3 are symmetrically disposed at a left side and a right side of the to-be-sprayed product 7. The three image capturers 3 can accurately capture coordinate information of the to-be-sprayed region of the to-be-sprayed product 7.

A difference between a position of the to-be-sprayed product 7 in the height direction when the to-be-sprayed product 7 is located at the image capturing station 30 and a position of the to-be-sprayed product 7 in the height direction when the to-be-sprayed product 7 is located at the spraying station 40a is smaller than or equal to 0.5 mm. Further, a difference between a position of the to-be-sprayed product 7 in a direction perpendicular to the predetermined direction when the to-be-sprayed product 7 is located at the image capturing station 30 and a position of the to-be-sprayed product 7 in the direction perpendicular to the predetermined direction when the to-be-sprayed product 7 is located at the spraying station 40a is smaller than or equal to 0.5 mm. An error between coordinate data of the to-be-sprayed product 7 at the image capturing station 30 in both the height direction and a horizontal direction and coordinate data of the to-be-sprayed product 7 at the spraying station 40a in both the height direction and the horizontal direction is smaller than or equal to 0.5 mm, which can ensure a small error between positioning information of the to-be-sprayed region obtained at the image capturing station 30 and that obtained at the spraying station 40a, guaranteeing that the coating material can be accurately sprayed within the to-be-sprayed region.

The guide rail 41 is selected to be a linear guide rail. The material carrier 5 is configured to transport a product at a predetermined constant speed to ensure that an error does not exceed 0.5 mm. In an embodiment, a moving speed of the material carrier 5 is smaller than or equal to 10 m/min. If the moving speed of the material carrier 5 is too high (i.e., if a moving speed of the to-be-sprayed product 7 is too high), mist occurs on an outer surface of the to-be-sprayed product 7 during the spraying of the coating material, resulting in an unsatisfactory coating appearance.

FIG. 12 illustrates a schematic structural view of an example of the final curing mechanism 2 according to some embodiments of the present invention. As illustrated in FIG. 12, the final curing mechanism 2 further includes a second fixing member 22. The final curing lamp assembly 21 is mounted inside the housing 100 through the second fixing member 22. When three final curing lamp assemblies 21 are provided, one of the three final curing lamp assemblies 21 is disposed above the material carrier 5 via the second fixing member 22, and another two of the three final curing lamp assemblies 21 are located at two sides of the material carrier 5 perpendicular to the predetermined direction, to avoid curing blind spots and improve a coating curing effect.

In an embodiment, the final curing lamp assembly 21 located at a top of the material carrier 5 is referred to as a first final curing lamp assembly, and the final curing lamp assembly 21 located at each of two sides of the material carrier 5 is referred to as a second final curing lamp assembly. During the final curing of the coating, the second final curing lamp assembly needs to be moved close to the to-be-sprayed product 7 to ensure a final curing effect of the coating. Based on this, the final curing mechanism 2 further includes a final curing drive component (not illustrated in the figure) mounted at the third housing 100c or on the ground. The final curing drive component is configured to drive the second final curing lamp assembly to move, allowing the second final curing lamp assembly to move close to or away from the to-be-sprayed product 7. In practical operation, when the final curing needs to be performed on the coating of the to-be-sprayed product 7, the final curing drive component drives the second final curing lamp assembly to move close to the to-be-sprayed product 7. After the final curing is completed, the final curing drive component drives the second final curing lamp assembly to move away from the to-be-sprayed product 7, to facilitate a movement of the material carrier 5 carrying the to-be-sprayed product 7 along the guide rail 41 and avoid an interference between the material carrier 5 or the to-be-sprayed product 7 and the second final curing lamp assembly. It should be understood that the final curing drive component may be a linear driver, such as a linear motor, a cylinder, a hydraulic cylinder, or an electric push rod. The linear driver is configured to drive the second final curing lamp assembly to move in the horizontal direction perpendicular to the predetermined direction to bring the second final curing lamp assembly close to or away from the to-be-sprayed product 7. The final curing drive component may also be a rotary driver. The rotary driver is capable of driving the second final curing lamp assembly to rotate about a vertical direction to bring the second final curing lamp assembly close to or away from the to-be-sprayed product 7.

It should be understood that a luminous intensity of the final curing lamp assembly 21 is greater than a luminous intensity of the initial curing lamp assembly 14. Therefore, a large amount of heat is generated by the final curing lamp assembly 21 during operation, which leads to an excessively high temperature of the to-be-sprayed product 7 over long-term use. When the to-be-sprayed product 7 contains electronic components, to avoid damages caused by the high temperature to the electronic components of the to-be-sprayed product 7, cooling and heat insulation for the to-be-sprayed product 7 are necessary during the final curing. When the to-be-sprayed product 7 is the battery, the excessively high temperature is likely to damage components such as a pole and an explosion-proof valve of the battery. Therefore, cooling and heat insulation measures for an outer surface of the battery are necessary during the final curing of the coating material.

The final curing mechanism 2 further includes a cooling and heat-insulation unit having a heat-insulation layer. The heat-insulation layer is configured to block or delay transfer of heat generated by the final curing lamp assembly 21 to the to-be-sprayed product 7. It should be understood that, the cooling and heat-insulation unit may include a linear light-transmitting heat-insulation plate that forms the heat-insulation layer; or the cooling and heat-insulation unit may include an air knife assembly, in which case an airflow blown by the air knife assembly forms the heat-insulation layer; or the cooling and heat-insulation unit may include both the linear light-transmitting heat-insulation plate and the air knife assembly.

For the first case, the cooling and heat-insulation unit includes a linear light-transmitting heat-insulation plate 23. The linear light-transmitting heat-insulation plate 23 is disposed at a side of the final curing lamp assembly 21 facing the to-be-sprayed region. The curing light can pass through the linear light-transmitting heat-insulation plate 23 to irradiate on the coating material without changing a wavelength of the curing light. The linear light-transmitting heat-insulation plate 23 may be a quartz plate, i.e., a quartz light-transmitting heat-insulation plate. When the to-be-sprayed product 7 is the battery, the linear light-transmitting heat-insulation plate 23 can not only absorb the heat generated by the final curing lamp assembly 21, but also prevent the high temperature from damaging the pole and internal components of the battery. As an example, as illustrated in FIG. 12, when the three final curing lamp assemblies 21 are provided, each final curing lamp assembly 21 is provided with the linear light-transmitting heat-insulation plate 23 at the side of the final curing lamp assembly 21 facing the to-be-sprayed region.

For the second case, the cooling and heat-insulation unit includes the air knife assembly. The air knife assembly is located between the final curing lamp assembly 21 and the to-be-sprayed product 7. A projection of the air knife assembly on a surface of the to-be-sprayed product 7 is spaced apart from the to-be-sprayed region. The air knife assembly is configured to generate an airflow. A flow direction of the airflow intersects a line connecting the final curing lamp assembly 21 and the to-be-sprayed product 7. The airflow is capable of blocking or delaying the transfer of the heat from the final curing lamp assembly 21 to the to-be-sprayed product 7. Further, the air knife assembly is also capable of blowing out a cooling airflow. Through heat exchange between the cooling airflow and a hot airflow, a cooling and heat-insulation effect is improved. As an example, when three final curing lamp assemblies 21 are provided, at least three air knife assemblies are provided. The airflow blown out by the air knife assembly is present between each final curing lamp assembly 21 and the to-be-sprayed region, in such a manner that the airflow is utilized to block the transfer of the heat generated by the final curing lamp assembly 21 to the to-be-sprayed product 7.

For the third case, the cooling and heat-insulation unit includes both the linear light-transmitting heat-insulation plate 23 and the air knife assembly. An arrangement of the linear light-transmitting heat-insulation plate 23 may refer to that described in the first case, and an arrangement of the air knife assembly may refer to that described in the second case, which are not elaborated herein.

In summary, the present invention further provides the final curing mechanism 2. The final curing mechanism 2 includes the final curing lamp assembly 21 and the cooling and heat-insulation unit, both of which are mounted in the third housing 100c. The cooling and heat-insulation unit may be the linear light-transmitting heat-insulation plate 23, or the air knife assembly, or a combination of the linear light-transmitting heat-insulation plate 23 and the air knife assembly.

Based on the above description of the method for spray printing the insulation layer of the lithium battery and the apparatus for spray printing the insulation layer of the lithium battery, an example of spraying the insulation layer onto the battery case of the battery is provided for explanation. As an example, a thickness of the insulation layer on the battery case is 60 µm, and two times of spraying and initial curing and one time of final curing are required to form the insulation layer.

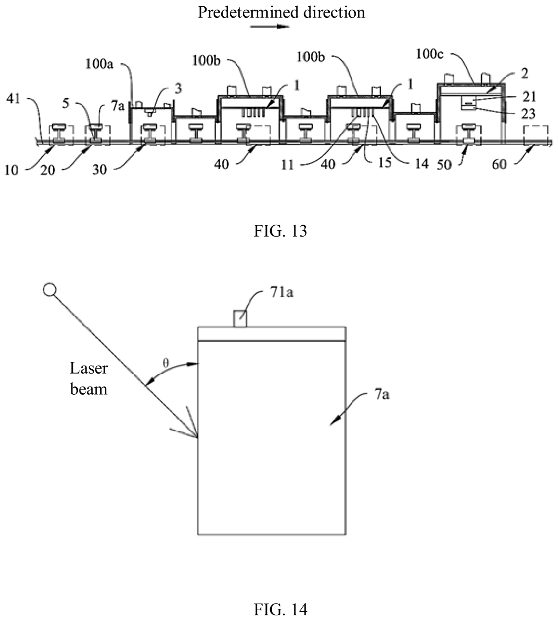

FIG. 13 illustrates a schematic structural view of still yet another example of the apparatus for spray printing the insulation layer of the lithium battery according to some embodiments of the present invention. As illustrated in FIG. 13, the apparatus for spray printing the insulation layer of the lithium battery includes the loading station 10, the pretreatment station 20, the image capturing station 30, two spraying-curing stations 40, the final curing station 50, the unloading station 60, the laser generator (not illustrated in the figure), the image capturer 3, two spraying and curing mechanisms 1, the final curing mechanism 2, the first housing 100a, two second housings 100b, the third housing 100c, the material carrier 5, the driving mechanism, and the main control mechanism (not illustrated in the figure). The spraying and curing mechanism 1 includes the spray printing head 11, the light blocking plate 15, and the initial curing lamp assembly 14. The final curing mechanism 2 includes the final curing lamp assembly 21 and the linear light-transmitting heat-insulation plate 23. The driving mechanism includes the driver and the guide rail 41. At least seven material carriers 5 are disposed at the guide rail 41. Each material carrier 5 is capable of holding a battery 7a. The driver is configured to drive the material carrier 5 to move along the guide rail 41.

Based on the above apparatus for spray printing the insulation layer of the lithium battery, the present invention further provides the method for spray printing the insulation layer of the lithium battery. The method for spray printing the insulation layer of the lithium battery includes the following steps.

In step S1, the driver drives the material carrier 5 to move along the guide rail 41, and a first material carrier 5 moves to the loading station 10 where a first battery 7a is manually placed or placed by the loading device at the first material carrier 5.

In step S2, the driver drives the material carrier 5 to move along the guide rail 41, the first material carrier 5 moves to the pretreatment station 20 where an outer surface of a battery case of the first battery 7a is pre-treated using the laser generator; a second material carrier 5 moves to the loading station 10 where a second battery is manually placed or placed by the loading device at the second material carrier 5.

In step S3, the driver drives the material carrier 5 to move, the first material carrier 5 moves to the image capturing station 30 where the image capturer 3 identifies and locates coordinate data of the battery case of the first battery 7a and transmits the coordinate data to the main control mechanism; the second material carrier 5 moves to the pretreatment station 20 where an outer surface of a battery case of a second battery 7a is pre-treated using the laser generator; a third material carrier 5 moves to the loading station 10 where a third battery 7a is manually placed or placed by the loading device at the third material carrier 5.

In step S4, the driver drives the material carrier 5 to move, the first material carrier 5 sequentially passes through the spraying station 40a (as illustrated in FIG. 4) and the curing station 40b (as illustrated in FIG. 4) of the first spraying-curing station 40, the main control mechanism controls the spray printing head 11 to spray a first layer of insulation coating on the battery case of the first battery 7a, and the initial curing lamp assembly 14 performs initial curing on the first layer of insulation coating on the first battery 7a; the second material carrier 5 moves to the image capturing station 30 where the image capturer 3 identifies and locates coordinate data of the battery case of the second battery 7a and transmits the coordinate data to the main control mechanism; the third material carrier 5 moves to the pretreatment station 20 where an outer surface of a battery case of the third battery 7a is pre-treated using the laser generator; a fourth material carrier 5 moves to the loading station 10 where a fourth battery 7a is manually placed or placed by the loading device at the fourth material carrier 5.

A spray printing accuracy is 1 inch×1 inch with no less than 360px×720px pixels. A positioning error of the to-be-sprayed region between the image capturing station 30 and the spraying station 40a is smaller than or equal to 0.5mm. A standard for the initial curing of the insulation coating is that: when the battery case is placed upright, the insulation coating does not flow on the battery case. Additionally, during the initial curing of the insulation coating on the first battery 7a, the light blocking plate 15 is placed between the spray printing head 11 and the initial curing lamp assembly 14 to prevent the residual insulation coating from solidifying and clogging the nozzle 112 of the spray printing head 11.

In step S5, the driver drives the material carrier 5 to move, the first material carrier 5 sequentially passes through the spraying station 40a (as illustrated in FIG. 4) and the curing station 40b (as illustrated in FIG. 4) of the second spraying-curing station 40, the main control mechanism controls the spray printing head 11 to spray a second layer of insulation coating on the battery case of the first battery 7a, and the initial curing lamp assembly 14 performs initial curing on the second layer of insulation coating on the first battery 7a; the second material carrier 5 sequentially passes through the spraying station 40a (as illustrated in FIG. 4) and the curing station 40b (as illustrated in FIG. 4) of the first spraying-curing station 40, the main control mechanism controls the spray printing head 11 to spray a first layer of insulation coating on the battery case of the second battery 7a, and the initial curing lamp assembly 14 performs initial curing on the first layer of insulation coating on the second battery 7a; the third material carrier 5 moves to the image capturing station 30 where the image capturer 3 identifies and locates coordinate data of the battery case of the third battery 7a and transmits the coordinate data to the main control mechanism; the fourth material carrier 5 moves to the pretreatment station 20 where an outer surface of a battery case of the fourth battery 7a is pre-treated using the laser generator; a fifth material carrier 5 moves to the loading station 10 where a fifth battery 7a is manually placed or placed by the loading device at the fifth material carrier 5.

In step S6, the driver drives the material carrier 5 to move, the first material carrier 5 moves to the final curing station where the final curing lamp assembly 21 performs final curing on the two layers of initially cured insulation coating on the first battery 7a; the second material carrier 5 sequentially passes through the spraying station 40a and the curing station 40b of the second spraying-curing station 40; the main control mechanism controls the spray printing head 11 to spray a second layer of insulation coating on the battery case of the second battery 7a, and the initial curing lamp assembly 14 performs initial curing on the second layer of insulation coating on the second battery 7a; the third material carrier 5 sequentially passes through the spraying station 40a and the curing station 40b of the first spraying-curing station 40, the main control mechanism controls the spray printing head 11 to spray a first layer of insulation coating on the battery case of the third battery 7a, and the initial curing lamp assembly 14 performs initial curing on the first layer of insulation coating on the third battery 7a; the fourth material carrier 5 moves to the image capturing station 30 where the image capturer 3 identifies and locates coordinate data of the battery case of the fourth battery 7a and transmits the coordinate data to the main control mechanism; the fifth material carrier 5 moves to the pretreatment station 20 where an outer surface of the battery case of the fifth battery 7a is pre-treated using the laser generator; a sixth material carrier 5 moves to the loading station 10 where a sixth battery 7a is manually placed or placed by the loading device at the sixth material carrier 5.

In step S7, the driver drives the material carrier 5 to move, the first material carrier 5 moves to the unloading station 60 where the first battery 7a is removed by the operator or the unloading device; the second material carrier 5 moves to the final curing station 50 where the final curing lamp assembly 21 performs final curing on the two layers of initially cured insulation coating on the second battery 7a; the third material carrier 5 sequentially passes through the spraying station 40a and the curing station 40b of the second spraying-curing station 40, the main control mechanism controls the spray printing head 11 to spray a second layer of insulation coating on the battery case of the third battery 7a, and the initial curing lamp assembly 14 performs initial curing on the second layer of insulation coating on the third battery 7a; the fourth material carrier 5 sequentially passes through the spraying station 40a and the curing station 40b of the first spraying-curing station 40, the main control mechanism controls the spray printing head 11 to spray a first layer of insulation coating on the battery case of the fourth battery 7a, and the initial curing lamp assembly 14 performs initial curing on the first layer of insulation coating on the fourth battery 7a; the fifth material carrier 5 moves to the image capturing station 30 where the image capturer 3 identifies and locates coordinate data of the battery case of the fifth battery 7a and transmits the coordinate data to the main control mechanism; the sixth material carrier 5 moves to the pretreatment station 20 where an outer surface of the battery case of the sixth battery 7a is pre-treated using the laser generator; a seventh material carrier 5 moves to the loading station 10 where a seventh battery 7a is manually placed or placed by the loading device at the seventh material carrier 5.

When seven material carriers 5 are provided, the first material carrier 5 is recovered, and the step S1 to the step S8 are repeated to complete a spray printing process for the remaining batteries, until a required number of batteries is achieved.

When eight or more material carriers 5 are provided, the step S1 to the step S8 can be directly repeated, until the material carrier 5 needs to be recovered. During this process, the driver needs to continuously drive the material carriers 5 to move along the guide rail 41 to guarantee that process operations at other stations can proceed normally.

It should be understood that, when the thickness of the insulation layer on the battery case is 100 µm, the insulation layer can be formed by sequentially repeating three times of spraying and initial curing and one time of final curing. Technicians can design the quantity of times of spraying and initial curing based on a required thickness of the insulation layer on the battery case and requirements for the initial curing. Specific examples will not be elaborated herein.

Further, for insulation layers requiring two or more times of spraying and initial curing for formation, the quantity of spraying-curing stations 40 in the apparatus for spray printing the insulation layer of the lithium battery does not need to be equal to the quantity of times of spraying and initial curing. Instead, a plurality of times of spraying and initial curing can be achieved by driving the material carrier 5 to reciprocate a plurality of times between the spraying station 40a and the curing station 40b. Forming the insulation layer in this manner can reduce costs of the apparatus for spray printing the insulation layer of the lithium battery, and lower requirements of the apparatus for spray printing the insulation layer of the lithium battery for a factory floor space.

When the battery 7a sequentially passes through the spraying station 40a and the curing station 40b of the spraying-curing station 40, the driver drives the material carrier 5 to move at a constant predetermined speed, to ensure that the battery 7a moves at a constant speed, which allows the to-be-sprayed region of the battery 7a to be evenly coated with the insulation coating, enhancing a quality of the insulation layer. To further enhance the quality of the insulation layer, the negative pressure air duct 12 is used to suck away mist around the spray printing head 11 during the spraying of the insulation coating onto the battery, preventing the mist from affecting an appearance of the insulation layer.

During the final curing of the initially cured insulation layer, the cooling and heat insulation measure is applied to the outer surface of the battery 7a. For example, the cooling and heat insulation measure involves: using the linear light-transmitting heat-insulation plate 23 to block the heat generated by the final curing lamp assembly 21 from being transferred to the battery 7a, preventing components such as the pole and the explosion-proof valve of the battery 7a from being damaged due to the excessively high temperature, and avoiding damages to internal electronic components of the battery caused by the excessively high temperature.

In an embodiment, pretreating the battery case of the battery includes the following steps.

In step S10, the roughening treatment is performed on the outer surface of the battery 7a using laser to increase surface roughness of the outer surface of the battery 7a, enabling the insulation layer to adhere firmly to the battery 7a. After the roughening treatment, surface roughness Ra of the outer surface of the battery 7a ranges from 1 µm to 2 µm, and an average roughness depth Rz satisfies that Rz>8 µm.

In step S20, plasma cleaning is performed on the outer surface of the battery 7a to remove dust and/or organic substances from the outer surface of the battery 7a, enhancing adhesion between the insulation layer and the battery 7a.

In step S10, Gaussian laser or flat-top laser may be used. The Gaussian laser refers to a laser beam where an amplitude distribution across a cross section of a fundamental-mode radiation field emitted from a laser resonator follows a Gaussian function. The flat-top laser refers to a laser beam having a flat and uniform intensity distribution. In this embodiment, the flat-top laser may be used to perform the roughening treatment on the outer surface of the battery case, and power of the flat-top laser is controlled to be smaller than or equal to 1,500 W. A beam diameter of the flat-top laser is larger than that of the Gaussian laser. During operation, the flat-top laser enables a high alignment accuracy when processing the housing, leaving no obvious streaks on the battery case. Since the Gaussian laser has the smaller beam diameter, a predetermined spacing exists between beams during a processing, which is likely to causes some parts of the battery case to be etched while others are not, forming noticeable streaks at the battery case.

When a size of the battery case of the battery 7a is relatively large, the battery case needs to be subjected to at least two separate roughening treatments, with an overlapping region of each roughening treatment being smaller than or equal to 2 mm. During the roughening treatment, a temperature rise on a surface of the battery case must be controlled to be smaller than or equal to 80°C.

FIG. 14 is a schematic layout diagram of a laser beam and a battery during laser roughening according to some embodiments of the present invention. As illustrated in FIG. 14, when the roughening treatment is performed on a side surface of the battery 7a using the laser, a protective treatment must be applied to a pole 71a at a top cover of the battery 7a. The protective treatment may involve adjusting an irradiation direction of the laser beam, to direct the laser beam from a side of the battery 7a onto the side surface of the battery 7a from top to bottom. An angle θ between the laser beam and the side surface of the battery 7a must satisfy θ<90° during irradiation to prevent the laser beam from irradiating on the pole 71a.

In another embodiment, the protective treatment may further involve covering the pole 71a with a protective cover. By covering the pole 71a, the laser is prevented from irradiating on the pole 71a, avoiding damages to the pole 71a of the battery 7a caused by the laser.

In step S20, when the plasma cleaning is performed on the battery 7a, a plasma cleaning duration per unit area of the battery 7a should be greater than or equal to 0.5 s. 13.56 MHz radio-frequency plasma cleaning with power ranging from 100 W to 1,250 W may be used. After cleaning, a particle diameter on the outer surface of the battery 7a is smaller than or equal to 100 µm.

In the description of the present invention, it should be understood that, the orientation or the position indicated by terms such as "over", "below", "left", and "right" should be construed to refer to the orientation or the position as shown in the drawings, and is only for the convenience of describing and simplifying the operation, rather than indicating or implying that the pointed device or element must have a specific orientation, or be constructed and operated in a specific orientation, and therefore cannot be understood as a limitation of the present invention. Further, terms "first," "second," etc., are used for descriptive distinction and have no special meaning.

Reference throughout this specification to "an embodiment", "an example", or the like means that a particular feature, structure, material, or characteristic described in connection with the embodiment or example is included in at least one embodiment or example of the present invention. The appearances of the above phrases in various places throughout this specification are not necessarily referring to the same embodiment or example.

In addition, it should be understood that, although the specification is described in accordance with the embodiments, not each embodiment contains one independent technical solution. The specification is described in this manner only for the sake of clarity. Those skilled in the art should consider the specification as a whole. Also, the technical solutions in different embodiments can be combined appropriately to form other embodiments that can be understood by those skilled in the art.

## Claims

1. A final curing mechanism, comprising:
a housing;
a final curing lamp assembly mounted in the housing and spaced apart from a to-be-sprayed product, the final curing lamp assembly being configured to perform final curing on an insulation coating on the to-be-sprayed product;
a cooling and heat-insulation unit having a heat-insulation layer, wherein the heat-insulation layer is located between the final curing lamp assembly and the to-be-sprayed product and is configured to block or delay transfer of heat generated by the final curing lamp assembly to the to-be-sprayed product.

2. The final curing mechanism according to claim 1, wherein the cooling and heat-insulation unit comprises a linear light-transmitting heat-insulation plate mounted at an end of the final curing lamp assembly facing the to-be-sprayed product, the heat-insulation layer being formed by the linear light-transmitting heat-insulation plate.

3. The final curing mechanism according to claim 2, wherein the to-be-sprayed product is completely covered by a projection of the linear light-transmitting heat-insulation plate on the to-be-sprayed product.

4. The final curing mechanism according to claim 2, wherein the linear light-transmitting heat-insulation plate is a quartz light-transmitting heat-insulation plate.

5. The final curing mechanism according to claim 2, wherein a plurality of final curing lamp assemblies are provided, wherein:
a first portion of the plurality of final curing lamp assemblies is arranged to be suspended above the to-be-sprayed product;
a second portion of the plurality of final curing lamp assemblies is arranged to be located at two sides of the to-be-sprayed product; and
each of the plurality of final curing lamp assemblies is provided with the linear light-transmitting heat-insulation plate at the end of the final curing lamp assembly facing the to-be-sprayed product.

6. The final curing mechanism according to any one of claims 1 to 5, wherein the cooling and heat-insulation unit comprises an air knife assembly mounted in the housing, wherein:
a projection of the air knife assembly on the to-be-sprayed product is spaced apart from a to-be-sprayed region of the to-be-sprayed product; and
the air knife assembly is configured to generate an airflow to form the heat-insulation layer, for blocking the transfer of heat from the final curing lamp assembly to the to-be-sprayed product.

7. An apparatus for spray printing an insulation layer of a lithium battery, the apparatus comprising:
a spraying and curing mechanism;
the final curing mechanism according to any one of claims 1 to 6, wherein the spraying and curing mechanism is located upstream of the final curing mechanism and configured to perform spraying and initial curing on the to-be-sprayed product;
a material carrier configured to carry the to-be-sprayed product; and
a spraying station and a curing station that are sequentially arranged and spaced apart from each other in a predetermined direction, wherein the to-be-sprayed product is subjected to the spraying and the initial curing at the spraying station and the curing station, respectively, wherein the material carrier is configured to carry the to-be-sprayed product and move in the predetermined direction between the spraying station and the curing station, enabling the to-be-sprayed product to subject to two or more times of spraying and curing; and
wherein the final curing mechanism is configured to perform final curing on the to-be-sprayed product that has been subjected to the two or more times of spraying and curing.

8. The apparatus for spray printing an insulation layer of a lithium battery according to claim 7, wherein the spraying station and the curing station that are sequentially arranged and spaced apart from each other in the predetermined direction together constitute a spraying-curing station;
when one spraying-curing station is provided, the material carrier is configured to carry the to-be-sprayed product and reciprocate in the predetermined direction between the spraying station and the curing station, enabling the to-be-sprayed product to subject to the two or more times of spraying and curing; and
when two or more spraying-curing stations are provided, the two or more spraying-curing stations are arranged sequentially in the predetermined direction, wherein the material carrier is configured to carry the to-be-sprayed product, and move unidirectionally in the predetermined direction to sequentially pass through the two or more spraying-curing stations or reciprocate in the predetermined direction between the spraying station and the curing station, enabling the to-be-sprayed product to subject to the two or more times of spraying and curing.

9. The apparatus for spray printing an insulation layer of a lithium battery according to claim 8, wherein:
the quantity of spraying and curing mechanisms equals the quantity of spraying-curing stations, the spraying and curing mechanisms being arranged in a one-to-one correspondence with the spraying-curing stations;
the spraying and curing mechanism comprises a spray printing head and a curing lamp assembly, the spray printing head being configured to spray a coating material on the to-be-sprayed product located at the spraying station, and the curing lamp assembly being configured to perform curing on the coating material on the to-be-sprayed product located at the curing station.

10. The apparatus for spray printing an insulation layer of a lithium battery according to claim 8, the apparatus further comprising:
a driving mechanism comprising a driver and a guide rail, wherein the guide rail extends in the predetermined direction, and wherein the driver is configured to drive the material carrier to reciprocate or move unidirectionally along the guide rail.

11. The apparatus for spray printing an insulation layer of a lithium battery according to claim 8, the apparatus further comprising:
a loading station; and
an unloading station,
wherein the loading station is located upstream of all spraying-curing stations in the predetermined direction, and wherein the unloading station is located downstream of all the spraying-curing stations in the predetermined direction.

12. The apparatus for spray printing an insulation layer of a lithium battery according to claim 8, the apparatus further comprising:
a final curing station corresponding to the final curing mechanism and located downstream of all spraying-curing stations in the predetermined direction, wherein the final curing lamp assembly in the final curing mechanism is configured to perform final curing on the coating material on the to-be-sprayed product located at the final curing station.

13. The apparatus for spray printing an insulation layer of a lithium battery according to claim 8, wherein the curing lamp assembly comprises an initial curing lamp assembly and the final curing lamp assembly, wherein:
a luminous intensity of the final curing lamp assembly is greater than a luminous intensity of the initial curing lamp assembly;
the initial curing lamp assembly is configured to perform initial curing on the coating material on the to-be-sprayed product; and
the final curing lamp assembly is configured to perform final curing on the coating material on the to-be-sprayed product.

14. The apparatus for spray printing an insulation layer of a lithium battery according to claim 9, wherein the spraying and curing mechanism further comprises a plurality of negative pressure air ducts arranged around the spray printing head in a circumferential direction of the spray printing head, wherein:
each of the plurality of negative pressure air ducts has a lower end having a negative pressure suction port and is connected to an exhaust fan.

15. The apparatus for spray printing an insulation layer of a lithium battery according to claim 9, wherein the spraying and curing mechanism further comprises a light blocking plate located between the spray printing head and the curing lamp assembly, the light blocking plate being configured to block curing light from irradiating on a nozzle of the spray printing head.

16. The apparatus for spray printing an insulation layer of a lithium battery according to claim 15, wherein a length of the to-be-sprayed region of the to-be-sprayed product in the predetermined direction is L1, and wherein a distance from a downstream side of the nozzle of the spray printing head closest to the light blocking plate to an upstream side of the curing lamp assembly closest to the light blocking plate is L2, where L2=L1.

17. The apparatus for spray printing an insulation layer of a lithium battery according to claim 8, the apparatus further comprising:
an image capturing station; and
an image capturer corresponding to the image capturing station, wherein the image capturer is configured to identify and locate the to-be-sprayed region of the to-be-sprayed product located at the image capturing station.

18. The apparatus for spray printing an insulation layer of a lithium battery according to claim 17, the apparatus satisfying at least one of the following conditions:
a difference between a position of the to-be-sprayed product in a height direction when the to-be-sprayed product is located at the image capturing station and a position of the to-be-sprayed product in the height direction when the to-be-sprayed product is located at the spraying station is smaller than or equal to 0.5 mm; or
a difference between a position of the to-be-sprayed product in a direction perpendicular to the predetermined direction when the to-be-sprayed product is located at the image capturing station and a position of the to-be-sprayed product in the direction perpendicular to the predetermined direction when the to-be-sprayed product is located at the spraying station is smaller than or equal to 0.5 mm.

19. The apparatus for spray printing an insulation layer of a lithium battery according to claim 8, wherein a plurality of housings are provided, wherein:
the spraying and curing mechanism and the spraying-curing station corresponding to the spraying and curing mechanism are located in one of the plurality of housings;
the final curing mechanism is located in another one of the plurality of housings; and
each of the plurality of housings has an entrance for entry of the material carrier and an exit for exit of the material carrier.

20. The apparatus for spray printing an insulation layer of a lithium battery according to claim 19, the apparatus further comprising:
a door plate assembly, provided at each of the entrance and the exit of each of the plurality of housings and configured to open or close the entrance and the exit of the housing.

21. The apparatus for spray printing an insulation layer of a lithium battery according to claim 19, the apparatus further comprising:
a transition enclosure having a transition inlet for entry of the material carrier and a transition outlet for exit of the material carrier, wherein two adjacent housings of the plurality of housings are in communication with each other through the transition enclosure.

22. The apparatus for spray printing an insulation layer of a lithium battery according to claim 21, the apparatus further comprising:
a dust-removal and exhaust assembly, wherein each of the housing and the transition enclosure has an exhaust port, the dust-removal and exhaust assembly being disposed in the exhaust port.

23. A method for spray printing an insulation layer of a lithium battery, the method being applied in the apparatus for spray printing an insulation layer of a lithium battery according to any one of claims 7 to 22, and the method comprising:
a parameter presetting step: presetting a total thickness of a required coating as H₀, and presetting a thickness of a coating material sprayed in a single application as Hₓ, wherein H₀=m*Hₓ, where m is a positive integer, and m≥2; and
a spray printing step: performing m times of spraying and curing on the to-be-sprayed product, wherein during each time of the m times of spraying and curing, one spraying operation and one curing operation are sequentially performed on the to-be-sprayed product.

24. The method for spray printing an insulation layer of a lithium battery according to claim 23, wherein said performing the m times of spraying and curing on the to-be-sprayed product comprises:
setting n spraying-curing stations, where n is a positive integer and n≥1, wherein each of the n spraying-curing stations comprises the spraying station and the curing station that are sequentially arranged and spaced apart from each other in the predetermined direction, wherein:
when n=1, the to-be-sprayed product reciprocates m times in the predetermined direction between the spraying station and the curing station of the spraying-curing station, wherein the to-be-sprayed product is subjected to one spraying each time when the to-be-sprayed product passes through the spraying station, and wherein the coating material on the to-be-sprayed product is subjected to one curing each time when the coating material passes through the curing station;
when n≥2, the n spraying-curing stations are arranged sequentially in the predetermined direction, wherein:
when n≥m, the to-be-sprayed product sequentially passes through m of the n spraying-curing stations in the predetermined direction, wherein the to-be-sprayed product is subjected to one spraying and curing each time when the to-be-sprayed product passes through one spraying-curing station; and
when n<m, the to-be-sprayed product reciprocates in the predetermined direction between the spraying station and the curing station of the spraying-curing station, enabling the to-be-sprayed product to subject to m times of spraying and curing.

25. The method for spray printing an insulation layer of a lithium battery according to claim 24, the method further comprising, prior to the spray printing step:
an image capturing step: setting an image capturing station, identifying the to-be-sprayed product located at the image capturing station, and locating the to-be-sprayed region of the to-be-sprayed product.

26. The method for spray printing an insulation layer of a lithium battery according to claim 25, the method satisfying at least one of the following conditions:
a difference between a position of the to-be-sprayed product in a height direction when the to-be-sprayed product is located at the image capturing station and a position of the to-be-sprayed product in the height direction when the to-be-sprayed product is located at the spraying station is smaller than or equal to 0.5 mm; or
a difference between a position of the to-be-sprayed product in a direction perpendicular to the predetermined direction when the to-be-sprayed product is located at the image capturing station and a position of the to-be-sprayed product in the direction perpendicular to the predetermined direction when the to-be-sprayed product is located at the spraying station is smaller than or equal to 0.5 mm.

27. The method for spray printing an insulation layer of a lithium battery according to claim 24, wherein during a movement of the to-be-sprayed product, the to-be-sprayed product is transported along a straight line at a constant predetermined speed.

28. The method for spray printing an insulation layer of a lithium battery according to claim 24, wherein the spray-printing step further comprises, when a curing operation in the spraying and curing is initial curing:
performing final curing on the coating material on the to-be-sprayed product, wherein a light intensity of the final curing is greater than a light intensity of the initial curing.

29. The method for spray printing an insulation layer of a lithium battery according to claim 28, the method further comprising:
performing cooling and heat insulation on the to-be-sprayed product during the final curing.

30. The method for spray printing an insulation layer of a lithium battery according to claim 24, the method further comprising:
sucking away, during spraying performed on the to-be-sprayed product, coating material mist in a spraying range of the spraying station and dust outside the spraying range of the spraying station.

31. The method for spray printing an insulation layer of a lithium battery according to any one of claims 24 to 30, the method further comprising, prior to the spray printing step:
a pretreatment step: performing a roughening treatment on the to-be-sprayed region of the to-be-sprayed product.

32. The method for spray printing an insulation layer of a lithium battery according to claim 31, wherein said performing the roughening treatment on the to-be-sprayed region of the to-be-sprayed product comprises:
performing a laser roughening treatment on the to-be-sprayed region of the to-be-sprayed product,
wherein the pretreatment step further comprises:
a cleaning treatment: performing plasma cleaning on the to-be-sprayed region of the to-be-sprayed product.

33. The method for spray printing an insulation layer of a lithium battery according to claim 32, the method further comprising, when the to-be-sprayed product is a battery:
performing a protective treatment on a pole of the battery during the roughening treatment.
